# EUROPEAN PATENT SPECIFICATION

(11) **EP 3 501 275 B1**
(45) Date of publication and mention of the grant of the patent: **13.05.2020**
(21) Application number: 17209612.5
(22) Date of filing: 21.12.2017
(51) Int. Cl.: A01M 7/00, B05B 13/00

(54) **BOOM MOUNTING ASSEMBLY**
AUSLEGERMONTAGEANORDNUNG
ENSEMBLE DE MONTAGE DE FLÈCHE

(43) Date of publication of application: 26.06.2019
(73) Proprietor: Kverneland Group Nieuw-Vennep BV, 2153 LR Nieuw-Vennep (NL)
(72) Inventor: Vedder, Gert-Jan, 2461GH Ter Aar (NL)
(74) Representative: Bittner, Thomas L.

(56) References cited:
- GB-A- 2 153 194
- IE-A2- S20 020 555
- US-A- 4 561 591
- US-A1- 2015 173 343

## Description

The present disclosure refers to a boom mounting assembly for attachment to an agricultural machine.

### Background

For dispensing spray material, such as pesticides, herbicides, fungicides or fertilizer, on a field, an application machine may be provided. For example, a tractor may be equipped with an application machine with a boom from which such spray material is dispensed, for example via nozzles attached to the boom. Alternatively, a self-contained machine may be provided with a boom from which spray material is dispensed.

To ensure uniform dispensing and avoid damage to the boom, the boom may be equipped with a balance system for balancing the boom in a desired position, for example a horizontal position. For this, a movement of the boom relative to other components of the machine may be permitted. In some circumstances, such as when the ground the spray material is dispensed onto is inclined, it may be desirable to balance the boom in a non-horizontai position.

A boom mounting assembly for attachment to an application agricultural machine is disclosed in document EP 2 403 331 A1. The assembly comprises a boom support frame which is suspended from a primary frame mounted to a chassis. The boom support frame comprises a transverse beam for supporting an intermediate section of a fluid application boom. The suspension mechanism allows both yaw and pitch of boom support frame relative to the primary frame resulting from fore and aft forces on the boom. Dampers are each connected between the primary frame and the boom support frame at a position spaced from the transverse center of the assembly. Damping of pitch and asymmetrical yaw movement of the transverse beam away from a neutral position is controlled by the first and second dampers. The documents US 2015/173343 A1 and GB 2 153 194 A disclose further known boom mounting assemblies with a primary frame, a boom support frame and a first sub-frame member as well as a first roller member.

### Summary

It is an object of the present disclosure to provide a boom mounting assembly for attachment to an agricultural machine for which improved stability and performance in operation is provided.

For solving the object, a boom mounting assembly for attachment to an agricultural machine according to claim 1 is provided. Embodiments are the subject of dependent claims.

According to an aspect, a boom mounting assembly for attachment to an agricultural machine is provided, comprising: a primary frame; a boom support frame configured to support a boom and suspended from the primary frame such that the boom support frame can pivot in a transverse plane around a longitudinal axis of rotation provided in a pivot point; a first sub-frame member provided on the primary frame or the boom support frame; and a first roller member, the first roller member rotatable around a first roller axis of rotation provided on the first sub-frame member, and a running surface of the first roller member configured to rest detachably against at least one of the primary frame, the boom support frame, and a boom section of the boom; wherein the first sub-frame member is rotatable jointly with the first roller axis of rotation and the first roller member around a first sub-frame axis of rotation which is extending transversely to the first roller axis of rotation.

The primary frame may be configured to be mounted on a chassis. In an embodiment, the primary frame may be referred to as lifting frame if the primary frame is mounted to a lifting device configured to move the boom supported on the boom mounting assembly up and down for different modes of operation on the field, but also for transport.

The agricultural machine may be mounted permanently or detachably on an implement, self-driving vehicle, or tractor, e.g. crop sprayer.

The first sub-frame member may be provided on the primary frame resting against at least one of the boom support frame, and a boom section of the boom. The first sub-frame member may be configured to allow balancing of the boom support frame, e.g. gravity caused balancing.

The first roller member may be referred to as support roller supporting a frame section which is resting on the running surface.

The running surface of the roller member may be provided with a curved surface such as a semicircle shaped surface. Friction may be further reduced.

The first roller axis of rotation may be provided by a first axis member fixedly connected to the first sub-frame member.

The first roller member may be provided with a plastic roller. The plastic roller is made of a plastic material, e.g. thermoplastic material such as thermoplastic polyurethane. In an embodiment, the roller may be made of ultra-high-molecular-weight polyethylene (UHMWPE). Alternatively, the roller may be made of nylon or a polyamide different than nylon. As a further alternative, the roller may be made of a non-polyamide material such as a different polymer, a metal, a metal alloy, rubber or any other suitable material. The roller may be supported on one of a rolling bearing and a slide bearing. The rolling bearing may be a ball bearing. The rolling bearing may be made of metal, at least in parts. For example, the rolling bearing may be a steel ball bearing. The roller may be supported on more than one bearing. For example, the roller may be supported on two steel ball bearings. Alternatively, support may be provided by the slide bearing, e.g. a bushing made of polymer / plastic or steel or other metal material.

The first roller member may be provided with a twin-roller. Both rollers may be provided within a single first sub-frame member. The first roller member may comprise more than two rollers. The roller may be provided on one and the same axis of rotation. Alternatively, there may two or more (parallel) first roller axis of rotation provided on the first sub-frame member. The rollers may be provided in separated openings of the sub-frame member.

The first sub-frame axis of rotation may be extending vertically or tilted with respect to the vertical line.

At least one of the first sub-frame axis of rotation and the first roller axis of rotation may be extending in a horizontal frame plane of the primary frame or a plane extending parallel to the horizontal frame plane of the primary frame.

The first sub-frame member may be provided in a frame opening surrounded by frame sections. For example, the first sub-frame member may be provided in a frame opening surrounded by frame sections of the primary frame, wherein the boom support frame is resting against the first roller member, e.g. a middle section of the boom support frame.

The first sub-frame member may be detachably mounted to at least one of the primary frame, the boom support frame, and a boom section of the boom. For example, a screw connection may be applied for detachably mounting the first sub-frame member.

The boom mounting assembly may further have a roller assembly comprising: the first sub-frame member, and the first roller member; a second sub-frame member provided on the primary frame or the boom support frame; and a second roller member, the second roller member rotatable around a second roller axis of rotation provided on the second sub-frame member, and a running surface of the second roller member configured to rest detachably against at least one of the primary frame, the boom support frame, and a boom section of the boom; wherein the second sub-frame member is rotatable jointly with the second roller axis of rotation and the second roller member around a second sub-frame axis of rotation which is extending transversely to the second roller axis of rotation.

The second roller member may be resting against another frame section than the first roller member. Alternatively, the first and second roller members may be resting against one and the same frame section. Orientation of the first and second axis of rotation may be different. In an alternative embodiment, the first and second axis of rotation may be in parallel orientation. Orientation of the first and second sub-frame axis of rotation may be different or parallel. Embodiments disclosed for the first roller member / first sub-frame member may apply to the second roller member / second sub-frame member *mutatis mutandis.* Also, one or more additional roller members / sub-frame members may be provided with a design similar or equal to the one described for the embodiments of the first roller member / first sub-frame member.

The first sub-frame member with the first roller member may be provided in an upper section of the primary frame; and the second sub-frame member with the second roller member may be provided in a lower section of the primary frame, the lower section being provided beneath the upper section.

The first roller axis of rotation and the second roller axis of rotation may be crossing in the pivot point. Alternatively, the first roller axis of rotation and the second roller axis of rotation may be crossing in a point below the pivot point, but above an upper sub-frame member comprising an upper roller member. Alternatively, the crossing point may be provided below upper sub-frame member. An arrangement may be provided, comprising the first and second roller members provided within the first and second sub-frame members, respectively, wherein, with respect to the vertical line, the first axis of rotation is tilted by a first angle and the second axis of rotation is tilted by a second angle. The first and second angle may be having opposite signs. A first angle value of the first angle may be equal to or different from a second angle value of the second angle. At least one of the first and second angle may have an angle value between 0 degree and 90 degree, alternatively, between 10 degree and 80 degree.

The roller assembly may be further comprising: a third sub-frame member provided on the primary frame or the boom support frame; and a third roller member, the third roller member rotatable around a third roller axis of rotation provided on the third sub-frame member, and a running surface of the third roller member configured to rest detachably against at least one of the primary frame, the boom support frame, and a boom section of the boom; wherein the third sub-frame member is rotatable jointly with the third roller axis of rotation and the third roller member around a third sub-frame axis of rotation which is extending transversely to the third roller axis of rotation. For at least one of the roller members the axis of rotation may be oriented vertically or horizontally. The embodiments disclosed for the first and / or second roller members / the first and / or second sub-frame members may be applied to the third roller member / the third sub-frame member *mutatis mutandis.*

Each of the first, second and third sub-frame members may be provided in a corner section of a triangle arrangement. Alternatively, a plurality of sub-frame members may be provided in corners of a polygon arrangement, e.g. a square such as trapeze arrangement. For example, instead of a single sub-frame member two or more sub-frame members may be provided, e.g. in an upper frame section or opening. For at least one or all of such sub-frame members the sub-frame axis of rotation may be tilted with respect to the vertical line.

The pivot point may be provided with a ball joint. For example, the first sub-frame may be provided with a ball joint which rests on an axle extending from the primary frame whereby the boom support frame is suspended from the primary frame. The ball joint may enable at least some rotational movement around more than one axis passing through the pivot point.

The boom support frame may comprise pendulums on opposite sides. The boom may be suspended from the pendulums. For example, two pendulums may be provided on opposite sides of the second sub-frame and the boom may be suspended from the pendulums. The pendulums may provide quick stabilization. For example quick stabilization of the boom may be provided after a rocking movement caused by an agricultural machine comprising the boom mounting assembly moving over an obstacle such as a rock on the ground.

The primary frame may be configured to be mounted on a chassis, for example a chassis of an agricultural machine. In embodiments, the primary frame may be mounted to a lifting device configured to move the boom supported on the boom mounting assembly up and down for different modes of operation on the field and / or for transport. In such embodiments, the primary frame may also be referred to as a lifting frame.

According to an alternative aspect, a boom mounting assembly for attachment to an agricultural machine may be provided. The boom mounting assembly comprises a primary frame and a boom support frame configured to support a boom and suspended from the primary frame such that the boom support frame can pivot in a transverse plane around a longitudinal axis of rotation provided in a pivot point. The boom support frame comprises a first sub-frame connecting to the primary frame, a second sub-frame supported by the first sub-frame in support sections provided, in a transverse direction, on opposite sides of the pivot point, and an actuator connecting to the first and second sub-frames. The actuator is operable such that the support sections can be moved relative to the pivot point, thereby, in a transverse direction increasing a distance between the pivot point and a support section on one side of the pivot point and, at the same time, decreasing a distance between the pivot point and a support section on an opposite side of the pivot point and vice versa.

Optionally, the boom mounting assembly may comprise a sub-frame member provided on the primary frame or the boom support frame; and a first roller member, the first roller member rotatable around a first roller axis of rotation provided on the sub-frame mem¬ber, and a running surface of the first roller member configured to rest detachably against at least one of the primary frame, the boom support frame, and a boom section of the boom; wherein the sub-frame member is rotatable jointly with the first axis of rotation and the first roller member around a first sub-frame axis of rotation which is extending transversely to the first roller axis of rotation.

Alternatively, a method for controlling operation of a boom mounting assembly attached to an agricultural machine may be provided. The boom mounting assembly comprises a primary frame and a boom support frame configured to support a boom and suspended from the primary frame such that the boom support frame can pivot in a transverse plane around a longitudinal axis of rotation provided in a pivot point. The boom support frame comprising a first sub-frame connecting to the primary frame, a second sub-frame supported by the first sub-frame in support sections provided, in a transverse direction, on opposite sides of the pivot point; and an actuator connecting to the first and second sub-frames. The method comprises moving the agricultural machine over a ground; receiving measurement signals in a control unit functionally connected to the actuator, the measurement signals indicative of an inclination angle caused by uneven ground, and generating control signals and providing the control signals to the actuator for operating the actuator in dependence on the measurement signal such that, depending on the inclination angle, the support sections are moved relative to the pivot point, thereby, in a transverse direction increasing a distance between the pivot point and a support section on one side of the pivot point and, at the same time, decreasing a distance between the pivot point and a support section on an opposite side of the pivot point and vice versa.

According to the technologies proposed herein, the second sub-frame is supported by the first sub-frame in support sections. The support sections may be one or more support points or areas in which the second sub-frame is supported by the first sub-frame. When the support sections are moved relative to the pivot point, the support sections may also move relative to the first and / or the second sub-frame. For example, the support sections may be two points of contact between the first sub-frame and the second sub-frame, the points of contact being fixed on the second sub-frame while they move along the first sub-frame when the actuator is operated to move the support sections relative to the pivot point. Alternatively or additionally, the support sections may move relative to subcomponents of the first and / or the second sub-frame but remain fixed relative to the sub-frame as a whole. For example, a separate component of the sub-frame may move relative to the sub-frame and a support section may move along the moving subcomponents while it stays fixed relative to the sub-frame as such. At the points of contact between the first sub-frame and the second sub-frame, corresponding support sections on the first sub-frame and the second sub-frame, respectively, may be provided.

The boom mounting may further comprise a transversely extending frame member, first support sections provided on the transversely extending frame member on both of the opposite sides of the pivot point. The support sections may comprise one or more support points on the transversely extending frame member on each of the opposing sides of the pivot point. The transversely extending frame member may be provided with a hollow profile. For example, the transversely extending frame member may be provided with a square cross-section. Alternatively or additionally, the transversely extending frame member may be provided with a non-hollow profile. For example, the profile may be in the form of a T-beam or an I-beam. The transversely extending frame member may comprise different profiles. For example, the transversely extending frame member may comprise a hollow profile, in sections, and a non-hollow profile, in different sections.

The first sub-frame may be provided with the transversely extending frame member. Alternatively, the second sub-frame may be provided with the transversely extending frame member.

The boom mounting assembly may further comprise support members, the support members providing second support sections on both of the opposite sides of the pivot point and being supported on the transversely extending frame member such that the support members can be moved relative to the transversely extending frame in transverse direction by the actuator. The second support sections may correspond to the first support sections in points of contact between the first sub-frame and the second sub-frame.

One or more support members may be provided on each of the opposite sides of the pivot point. An equal number of support members may be provided on each of the opposite sides of the pivot point. Alternatively, the number of support members provided on one side of the pivot point may be different from the number of support members provided on the opposite side of the pivot point.

In a neutral position of the support sections relative to the pivot point, the respective distance between the pivot point and the support members on each of the opposite sides of the pivot point may be equal. In particular, in embodiments in which more than one support member is provided on each side of the pivot point, the distance between the pivot point and corresponding support members on each of the opposite sides of the pivot point may be equal. In the neutral position, the center of mass of all components suspended from the primary frame may lie vertically below the pivot point. A boom supported by the boom support frame may freely balance in a horizontal position when the support sections are in the neutral position.

The support members may be provided on the second sub-frame. In embodiments, the first sub-frame is provided with the transversely extending frame member and the support members are provided on the second sub-frame. Alternatively, the support members may be provided on the first sub-frame. In embodiments, the second sub-frame is provided with the transversely extending frame member and the support members are provided on the first sub-frame.

The support members may comprise a roller provided on at least one side of the pivot point. Rollers may be provided on each of the opposite sides of the pivot point. On each of the opposite sides of the pivot point, one or more rollers may be provided. The embodiments described with regard to the roller may apply to each or all of the one or more rollers. Each roller may provide at least one support point. A plurality of support points between the first and the second sub-frame may be provided by a plurality of rollers.

The roller may be pivotably supported on the second sub-frame. Alternatively, when the support members are provided on the first sub-frame, the roller may pivotably supported on the first sub-frame. The roller may be supported in a freely rotating manner. The transversely extending frame member may provide a rolling surface on which the roller is supported.

The roller may be provided with a curved surface such as a semicircle shaped surface. Friction may be further reduced.

The support members may each comprise a twin roller assembly. Thereby, one support member may be provided on each of the opposite sides of the pivot point and each of the support members may comprise two rollers in a twin roller assembly.

The roller may be a plastic roller. The plastic roller is made of a plastic material, e.g. thermoplastic material such as thermoplastic polyurethane. In an embodiment, the roller may be made of ultra-high-molecular-weight polyethylene (UHMWPE). Alternatively, the roller may be made of nylon or a polyamide different than nylon. As a further alternative, the roller may be made of a non-polyamide material such as a different polymer, a metal, a metal alloy, rubber or any other suitable material.

The roller may be supported on one of a rolling bearing and a sliding bearing. The rolling bearing may be a ball bearing. The rolling bearing may be made of metal, at least in parts. For example, the rolling bearing may be a steel ball bearing. The roller may be supported on more than one bearing. For example, the roller may be supported on two steel ball bearings. Alternatively, the roller may be supported by a slide bearing.

The boom mounting assembly may further comprise a control unit functionally connected to the actuator such that the actuator can be operated by control signals provided by the control unit. The control signals may be generated in dependence on measurement signals, for example measurement signals that are indicative of an inclination angle of the ground.

In an exemplary embodiment, when the boom is freely balancing in a horizontal position and, based on sensor signals, an inclination of the ground is determined, the actuator is operated by control signals to move the support sections relative to the pivot point such that the center of gravity of all components suspended from the primary frame shifts and the boom matches the inclination of the ground. The sensor signals may be, for example, sensors indicative of a respective distance of opposite distal ends of the boom to the ground.

The control unit may be provided in a control system. For example, the control unit may be provided in an ISOBUS system, such as a machine control network implementing the ISO 11683-11 standard.

The actuator may be extended and retracted to move the support sections relative to the pivot point. For example, the actuator may comprise a hydraulic cylinder and, to move the support sections relative to the pivot point, the piston of the hydraulic cylinder may be extended out of the barrel of the hydraulic cylinder and / or the piston may be retracted into the barrel.

The pivot point may be provided with a ball joint. For example, the first sub-frame may be provided with a ball joint which rests on an axle extending from the primary frame whereby the boom support frame is suspended from the primary frame. The ball joint may enable at least some rotational movement around more than one axis passing through the pivot point.

The boom support frame may comprise pendulums on opposite sides. The boom may be suspended from the pendulums. For example, two pendulums may be provided on opposite sides of the second sub-frame and the boom may be suspended from the pendulums. The pendulums may provide quick stabilization. For example quick stabilization of the boom may be provided after a rocking movement caused by an agricultural machine comprising the boom mounting assembly moving over an obstacle such as a rock on the ground.

The primary frame may be configured to be mounted on a chassis, for example a chassis of an agricultural machine. In embodiments, the primary frame may be mounted to a lifting device configured to move the boom supported on the boom mounting assembly up and down for different modes of operation on the field and / or for transport. In such embodiments, the primary frame may also be referred to as a lifting frame.

The boom mounting assembly may be attached to an agricultural machine which may be mounted, for example, to an implement, a self-driving or self-propelling vehicle or a tractor. Alternatively, the agricultural machine may be self-contained, i.e. need not be mounted to another device.

In the different embodiments, the agricultural machine to which the boom mounting assembly may be attached may be an agricultural application machine, for example, configured to move over ground or soil, such as a field, for dispensing a spray material onto the ground or soil. The agricultural application machine may be a sprayer. A plurality of application elements may be provided on the boom. The application elements may comprise a nozzle provided on the boom and configured to dispense the spray material.

Dispensing the spray material onto the ground may comprise dispensing the spray material onto the soil or ground, for example of a field, or onto plants growing thereon. The spray material to be dispensed may, for example, be a pesticide, a fungicide, an herbicide or a fertilizer to be sprayed onto the soil.

### Description of further embodiments

Following, embodiments, by way of example, are described with reference to figures. In the figures show:
- Fig. 1: a boom support frame;
- Fig. 2: a boom mounting assembly supporting a middle section of a boom;
- Fig. 3: a schematic representation of a boom mounting assembly supporting a boom in a neutral position;
- Fig. 4: a schematic representation of a boom mounting assembly supporting a boom in an inclined position;
- Fig. 5: a schematic representation of a boom mounting assembly supporting a boom in a different inclined position;
- Fig. 6: a schematic representation of elements of the boom mounting assembly in Fig. 2;
- Fig. 7: a schematic representation of a primary frame; and
- Fig. 8: a schematic representation of an assembly comprising a roller member mounted in a sub-frame member.

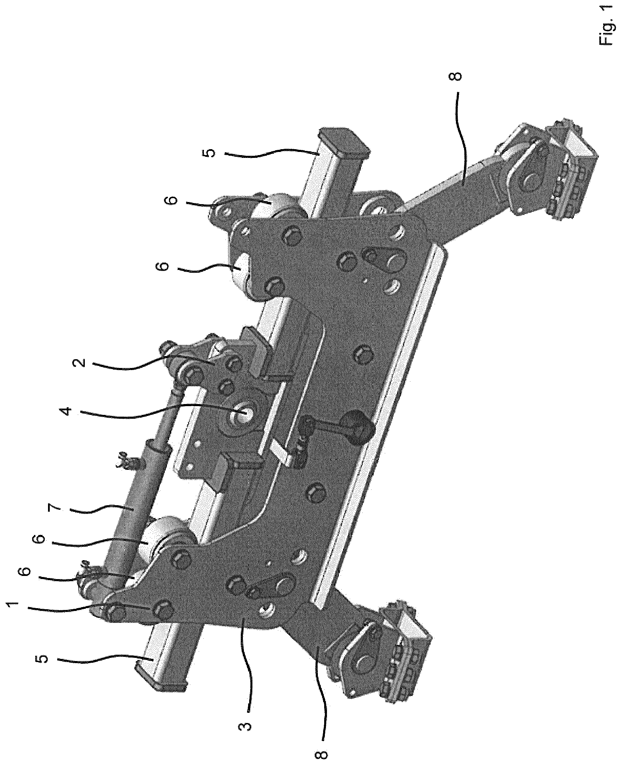

Fig. 1 shows a boom support frame 1. The boom support frame 1 comprises a first sub-frame 2 and a second sub-frame 3. The first sub-frame 2 is provided with a ball joint 4 which defines a pivot point of the boom support frame 1. The boom support frame 1 may rotate or pivot in a transverse plane perpendicular to a longitudinal axis defined by the main axis of the ball joint 4. The first sub-frame 2 further comprises a transversely extending frame member 5. The transversely extending frame member 5 comprises a left and a right profile on opposite sides of the ball joint 4. The left and the right profile are each provided with a square cross-section.

Rollers 6 are mounted to the second sub-frame 3 on steel ball bearings (not shown) such that the rollers 6 may freely rotate around a main axis of each roller 6. One twin roller assembly consisting of two rollers 6 is provided on the opposite sides of the ball joint 4. In alternative embodiments, different configurations of rollers 6 may be provided. For example one or more than two rollers 6 may be provided on the opposite sides of the ball joint 4 and / or a different number of rollers 6 may be provided on each of the opposite sides.

The rollers 6 may be plastic rollers made of a plastic material, e.g. thermoplastic material such as thermoplastic polyurethane. In an embodiment, the rollers 6 may be made of ultra-high-molecular-weight polyethylene (UHMWPE). Alternatively, the rollers 6 may be made of nylon or a polyamide different than nylon. As a further alternative, the rollers 6 may be made of a non-polyamide material such as a different polymer, a metal, a metal alloy, rubber or any other suitable material.

The second sub-frame 3 is supported by the first sub-frame 2 by the rollers 6 resting on the transversely extending frame member 5. The rollers 6 may roll along the respective upper surface of the profiles, thereby allowing a transverse movement of the second sub-frame 3 relative to the first sub-frame 2 along the extension of the transversely extending frame member 5. As the rollers 6 and the transversely extending frame member 5 will deform, at least minimally, under a load caused by the gravitational force, an area of contact is defined between each of the rollers 6 and the transversely extending frame member 5. These areas of contact provide support of the second sub-frame 3 on the first sub-frame 2 and may therefore be referred to as support sections. Herein, the areas of contact on the transversely extending frame member 5 may be referred to as first support sections and the areas of contact on the rollers 6 may be referred to as second support sections. When the second sub-frame 3 moves relative to the first sub-frame 2 along the transversely extending frame member 5, the rollers 6 rotate and move along on the respective upper surfaces of the transversely extending frame member 5 such that the area of contact between each roller 6 and the transversely extending frame member 5 moves on the upper surface of the transversely extending frame member 5 as well as on the circumferential surface of the roller 6. Thereby, the first support sections move on the upper surfaces of the profiles of the transversely extending frame member 5 and the second support sections move on the circumferential surface of the roller 6. At the same time, the second support sections do not move relative to the second sub-frame 3 as a whole.

The rollers 6 may be mounted on other bearings that steel ball bearings, for example on roller bearings or needle bearings. Different bearings may be used for each roller 6. Alternatively, a slide bearing may be applied.

An actuator 7 comprising a hydraulic cylinder connects the first sub-frame 2 and the second sub-frame 3. The actuator 7 may be extended, by extending the piston of the hydraulic cylinder out of the barrel of the hydraulic cylinder, and retracted, by retracting the piston of the hydraulic cylinder into the barrel of the hydraulic cylinder. By extending and retracting the actuator 7, the second sub-frame 3 is moved relative to the first sub-frame 2 in a transverse directions by way of the rollers 6 rolling along the respective upper surface of the profiles of the transversely extending frame member 5. Thereby, the support sections are moved relative to the ball joint 4 and the distance along the transversely extending frame member 5 between the ball joint 4 and the support sections on one side of the ball joint 4 is extended while, at the same time, the distance along the transversely extending frame member 5 between the ball joint 4 and the support sections on the opposite side of the ball joint 4 is lowered. In the embodiment shown in Fig. 1, when the actuator 7 is extended, the rollers 6 on the left side, and thus the support sections on the left side, of the ball joint 4 move away from the ball joint 4 and the rollers 6 on the right side, and thus the support sections on the right side, of the ball joint 4 move closer to the ball joint 4. When the actuator 7 is retracted, the rollers 6 on the right side, and thus the support sections on the right side, of the ball joint 4 move away from the ball joint 4 and the rollers 6 on the left side, and thus the support sections on the left side, of the ball joint 4 move closer to the ball joint 4.

In the embodiment shown, actuator 7 comprises a hydraulic cylinder. In alternative embodiments, the actuator 7 may comprise any other suitable component for achieving a movement between the first 2 and second 3 sub-frames. For example, actuator 7 may comprise an electric motor.

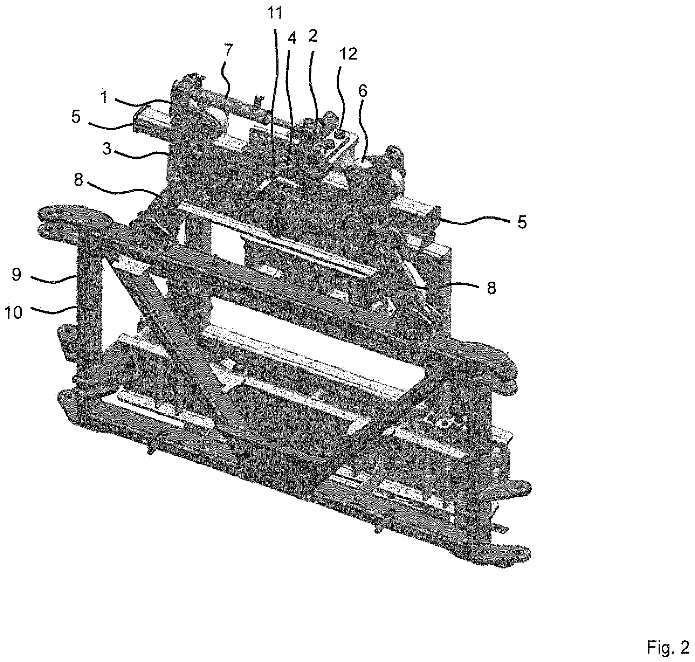

The boom support frame 1 further comprises pendulums 8 connected to the second sub-frame 3 on opposite sides. Fig. 2 shows a boom mounting assembly supporting a middle section 9 of a boom 10. The middle section 9 is suspended from the pendulums 8 connected to the second sub-frame 3. The ball joint 4 of the first sub-frame 2 of the boom support section 1 is mounted on an axle 11 of a primary frame 12. The axis of the axle 11 coincides with the main axis of the ball joint 4 and passes through the pivot point around which the boom support frame 1 may rotate in a transverse plane perpendicular to the coinciding axes of the axle 11 and the ball joint 4.

The primary frame 12 may be mounted to an agricultural machine, thereby mounting the boom 10 to the agricultural machine using the boom mounting assembly. By the boom support frame 1 rotating around the pivot point in the transverse plane relative to the primary frame 12, the boom 10 may be balanced, for example when the primary frame 12 moves due to movement of the agricultural machine. Additionally, the ball joint 4 allows limited rotation of the boom support frame 1 relative to the primary frame 12 other than a rotation in the transverse plane around the coinciding axes of the ball joint 4 and the axle 11. The axis of the axle 11 may be parallel to a longitudinal axis of the agricultural machine and / or a direction of movement of the agricultural machine at least in a neutral position of primary frame 12 with regard to the agricultural machine.

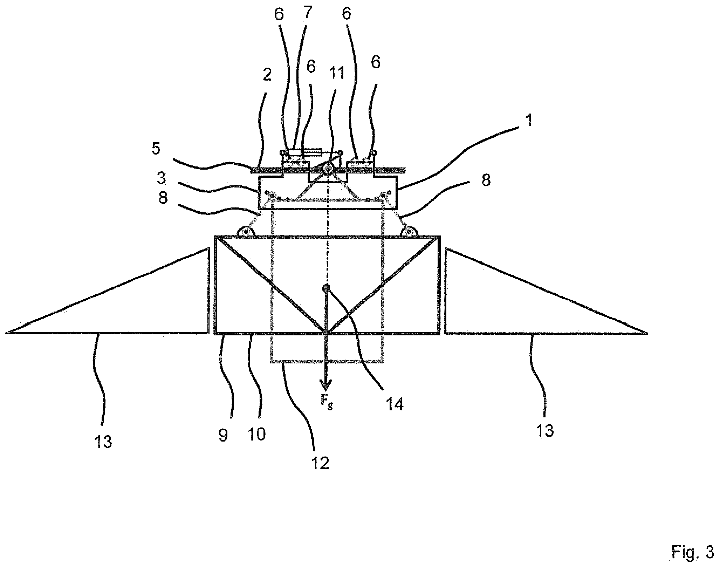

Fig. 3 shows a schematic representation of a boom mounting assembly supporting a boom 10. The boom 10 comprises a middle section 9 and outer sections 13 connected to the middle section 9. In Fig. 3, the boom support frame 1 in a neutral position in which each of the support sections on one side of the pivot point defined in the plane of view of Fig. 3 by the axle 11 has the same distance to the pivot point as the respective support section on the opposite side of the pivot point. The combined center of mass 14 of all components supported on the axle 11 lies vertically below the pivot point. Thereby, when free rotation of the boom support frame 1 around the axle 11 is possible, the boom 10 is balanced in a horizontal position, for example when the primary frame 12 moves out of a horizontal position because the agricultural machine moves over an inclined area of ground.

Balancing of the boom 10 in a horizontal position may be desired when the center of the agricultural machine, for example wheel of the agricultural machine, moves over an inclined area of ground while the overall area of ground covered by the boom, defined by the width of the boom from the tip of one outer section 13 to the other outer section 13, extends essentially horizontally. On the other hand, when the overall area of ground covered by the boom 10 is inclined, it may be desirable to balance the boom 10 in an inclined position, even when the center of the agricultural machine moves over a horizontal area of ground.

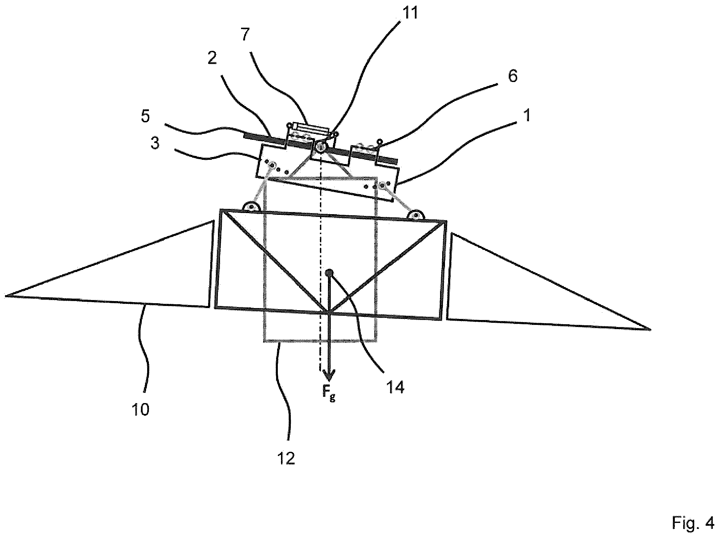

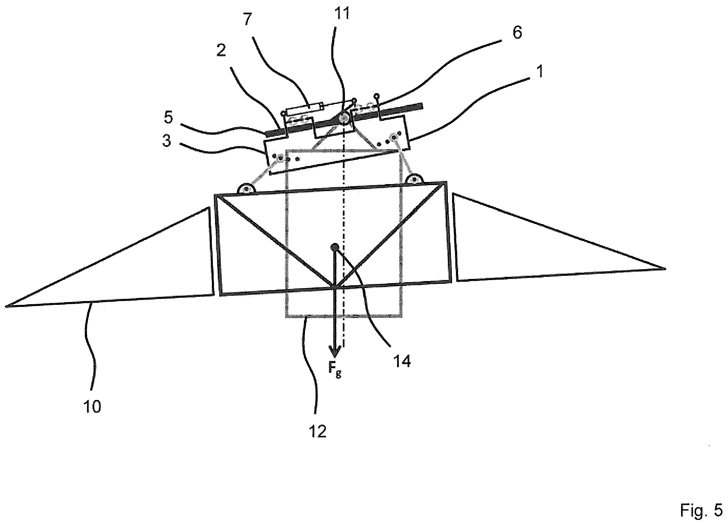

For balancing the boom 10 in an inclined position, the actuator 7 may be extended or retracted, resulting in a movement of the second sub-frame 3 relative to the first sub-frame 2 and the pivot point. The movement of the second sub-frame 3 relative to the pivot point causes the combined center of mass of all components supported by the ball joint 4 to move laterally out of the vertical position below the pivot point. When free rotation of the boom support frame 1 around the axle 11 is possible, the boom support frame 1 will rotate around the pivot point until the combined center of mass of all components supported by the ball joint 4 again lies vertically below the pivot point. This is illustrated in figures 4 and 5.

Fig. 4 shows the boom mounting assembly of Fig. 3 in which the actuator 7 has been retracted. The resulting movement of the second sub-frame 3 relative to the first sub-frame 2 has caused the rollers 6, and thereby the support sections, on the left side of the pivot point defined by the axle 11 in the plane of view of Fig. 4 to move closer to the pivot point along the transversely extending frame member 5 and the rollers 6 and support sections on the right side of the pivot point to move away from the pivot point, resulting in a shift of the combined center of mass 14 to the right. As a result, the boom support frame 1 and the boom 10 perform a clockwise rotating movement around the pivot point until the combined center of mass 14 again lies below the pivot point, resulting in an inclined position of the boom 10. In Fig. 4, the boom support frame 1 and the boom 10 have not completed the clockwise rotating movement around the pivot point. The boom 10 is in an inclined position, but the combined center of gravity 14 does not yet lie below the pivot point.

Fig. 5 shows the boom mounting assembly of Fig. 3 in which the actuator 7 has been extended. The resulting movement of the second sub-frame 3 relative to the first sub-frame 2 has caused the rollers 6, and thereby the support sections, on the right side of the pivot point defined by the axle 11 in the plane of view of Fig. 5 to move closer to the pivot point along the transversely extending frame member 5 and the rollers 6 and support sections on the left side of the pivot point to move away from the pivot point, resulting in a shift of the combined center of mass 14 to the left. As a result, the boom support frame 1 and the boom 10 perform a counterclockwise rotating movement around the pivot point until the combined center of mass 14 again lies below the pivot point, resulting in an inclined position of the boom 10. In Fig. 5, the boom support frame 1 and the boom 10 have not completed the counterclockwise rotating movement around the pivot point. The boom 10 is in an inclined position, but the combined center of gravity 14 does not yet lie below the pivot point.

In exemplary embodiments of the boom mounting assembly, rotation of the boom support frame 1 around the pivot point is limited to a pre-defined angular range. The angular range of rotation may be defined such that the likelihood of a collision of the outer sections 13 of the boom 10 is decreased, for example when agricultural machine is moving over ground with a steep inclination and the range of movement of the actuator 7, i.e. the range between a fully extended and a fully retracted position of the actuator 7, is not sufficient to achieve balancing of the boom 10 parallel to the ground.

The boom mounting assembly may further comprise a control unit functionally connected to the actuator 7 such that the actuator 7 can be operated by control signals provided by the control unit. Thereby, balancing of the boom 10 in an inclined position may be controlled by the control unit. The control signals may be generated in dependence on measurement signals, for example measurement signals that are indicative of an inclination angle of the ground. For example, the control unit may receive measurement signals indicative of an inclination angle from sensors that may be provided, for example, on the boom 10, and generate control signals in dependence on the measurement signals. The actuator 7 may then be operated according to the control signals to balance the boom 10 in an inclined positions, for example according to Fig. 4 or Fig. 5.

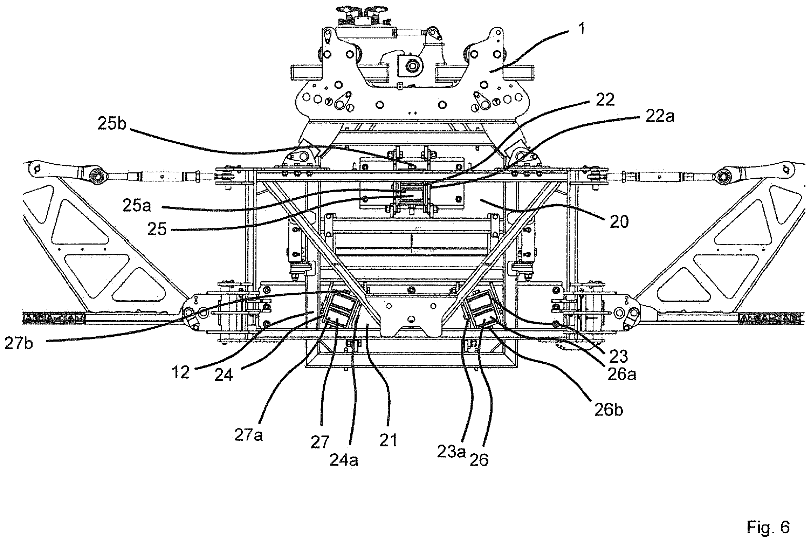

Fig. 6 shows a schematic representation of elements of the boom mounting assembly in Fig. 2. The boom support frame 1 and the primary frame 12 are depicted. Within frame openings 20, 21 a plurality of sub-frame members 22, ..., 24 is provided, each of the sub-frame members 22, ..., 24 comprising a roller member 25, ..., 27. In the embodiment shown, the roller members 25, ..., 27 are provided with a twin-roller 25a, ..., 27a. Alternatively (not shown), each of the roller members 25, ..., 27 may be provided with only a single roller. Also, more than two rollers may be provided for one or more of the roller members 25, ..., 27.

The rollers provided in the roller members 25, ..., 27 may be plastic rollers made of a plastic material, e.g. thermoplastic material such as thermoplastic polyurethane. In an embodiment, the rollers may be made of ultra-high-molecular-weight polyethylene (UHMWPE). Alternatively, the rollers may be made of nylon or a polyamide different than nylon. As a further alternative, the rollers may be made of a non-polyamide material such as a different polymer, a metal, a metal alloy, rubber or any other suitable material.

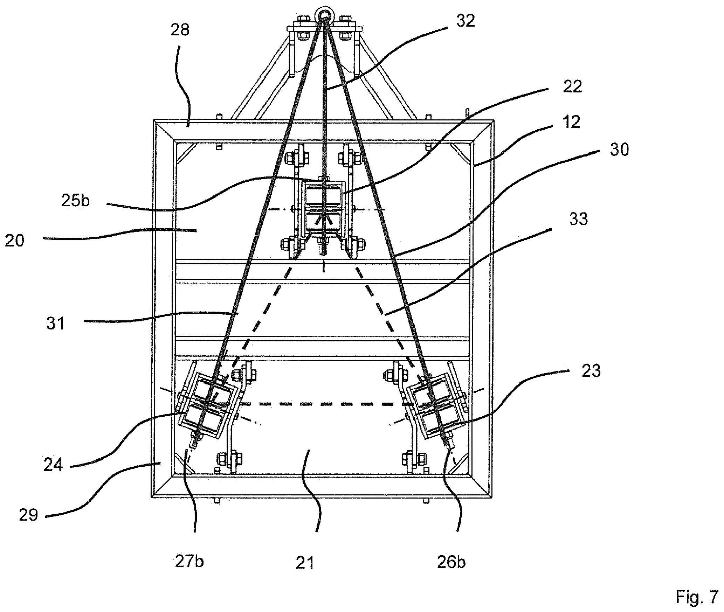

One of the roller members 25 is provided in an upper section 28 of the primary frame 12 (see Fig. 7). The two other roller members 26, 27 are provided in a lower section 29 of the primary frame 12.

For each of the roller members 25, ..., 27, a roller axis of rotation 25b, ..., 27b is provided. The sub-frame member 22, ..., 24 receiving one of the roller members 25, ..., 27 is rotatable around an sub-frame axis of rotation 22a, ..., 24a, the sub-frame axis of rotation 22a, ..., 24a extending transversely to the roller axis of rotation 25b, ..., 27b.

As shown in Fig. 7 by lines 30, ..., 32 the roller axis of rotation 25b, ..., 27b are crossing in the pivot point of the axle 11. The roller axis of rotation 26b, 27b are tilted with respect to the vertical line 32 by the same angle value. Alternatively, the first roller axis of rotation and the second roller axis of rotation may be crossing in a point below the pivot point of the axle 11, but above the (upper) sub-frame member 22 (see Fig. 7). Alternatively, the crossing point may be provided below the (upper) sub-frame member 22, e.g. when a rotation center of the balanced objects (boom support frame, boom) is below the sub-frame member 22.

The sub-frame members 22, ..., 24 are detachably mounted in the openings 20, 21 by screw connections.

Referring to Fig. 7, the sub-frame members 22, ..., 24 are provided in corners of a triangle 33. Alternatively, a plurality of sub-frame members may be provided in corners of a polygon, e.g. a square such as trapeze. For example, instead of the single sub-frame member 22 two or more sub-frame members (not shown) may be provided in the upper section. For at least one or all of such sub-frame members the sub-frame axis of rotation may be tilted with respect to the vertical line 32.

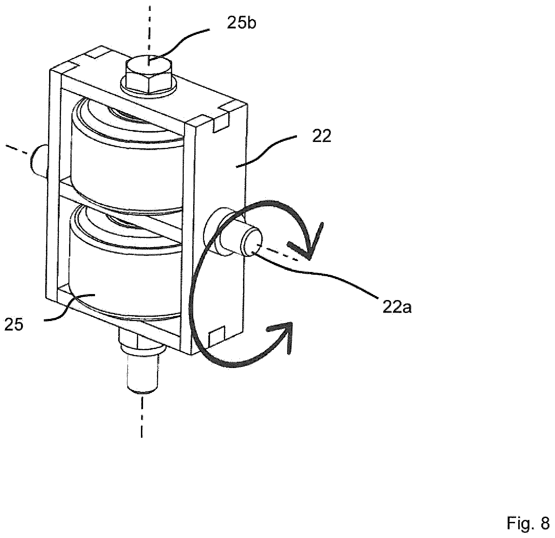

Fig. 8 shows a schematic representation of an assembly comprising the roller member 25 mounted in the sub-frame member 22.

The features disclosed in this specification, the figures and / or the claims may be material for the realization of various embodiments, taken in isolation or in various combinations thereof.

## Claims

1. A boom mounting assembly for attachment to an agricultural machine, comprising
- a primary frame (12);
- a boom support frame (1) configured to support a boom and suspended from the primary frame (12) such that the boom support frame (1) can pivot in a transverse plane around a longitudinal axis of rotation provided in a pivot point;
- a first sub-frame member (22; 23; 24) provided on the primary frame (12) or the boom support frame (1); and
- a first roller member (25; 26; 27), the first roller member (25; 26; 27) rotatable around a first roller axis of rotation (25b; 26b; 27b) provided on the first sub-frame member (22; 23; 24), and a running surface of the first roller member (25; 26; 27) configured to rest detachably against at least one of the primary frame (12), the boom support frame (1), and a boom section of the boom;
**characterized in that** the first sub-frame member (22; 23; 24) is rotatable jointly with the first roller axis of rotation (25b; 26b; 27b) and the first roller member (25; 26; 27) around a first sub-frame axis of rotation (22a; 23a; 24a) which is extending transversely to the first roller axis of rotation (25b; 26b; 27b).

2. The boom mounting assembly according to claim 1, wherein the first roller axis of rotation (25b; 26b; 27b) is provided by a first axis member fixedly connected to the first sub-frame member (22; 23; 24).

3. The boom mounting assembly according to claim 1 or 2, wherein the first roller member (25; 26; 27) is provided with a plastic roller.

4. The boom mounting assembly according to at least one of the preceding claims, wherein the first roller member (25; 26; 27) is provided with a twin-roller (25a; 26a; 27a).

5. The boom mounting assembly according to at least one of the preceding claims, wherein the first sub-frame axis of rotation (22a; 23a; 24a) is extending vertically or tilted with respect to the vertical line (32).

6. The boom mounting assembly according to at least one of the preceding claims, wherein at least one of the first sub-frame axis of rotation (22a; 23a; 24a) and the first roller axis of rotation (25b; 26b; 27b) is extending in a horizontal frame plane of the primary frame (12) or a plane extending parallel to the horizontal frame plane of the primary frame (12).

7. The boom mounting assembly according to at least one of the preceding claims, wherein the first sub-frame member (22; 23; 24) is provided in a frame opening (20; 21) surrounded by frame sections.

8. The boom mounting assembly according to at least one of the preceding claims, wherein the first sub-frame member (22; 23; 24) is detachably mounted to at least one of the primary frame (12), the boom support frame (1), and the boom section of the boom.

9. The boom mounting assembly according to at least one of the preceding claims, further comprising a roller assembly, comprising
- the first sub-frame member (22; 23; 24), and the first roller member (25; 26; 27);
- a second sub-frame member (22; 23; 24) provided on the primary frame (12) or the boom support frame (1); and
- a second roller member (25; 26; 27), the second roller member (25; 26; 27) rotatable around a second roller axis of rotation (25b; 26b; 27b) provided on the second sub-frame member (22; 23; 24), and a running surface of the second roller member (25; 26; 27) configured to rest detachably against at least one of the primary frame (12), the boom support frame (1), and the boom section of the boom;
wherein the second sub-frame member (25; 26; 27) is rotatable jointly with the second roller axis of rotation (25b; 26b; 27b) and the second roller member (25; 26; 27) around a second sub-frame axis of rotation (22a; 23a; 24a) which is extending transversely to the second roller axis of rotation (25b; 26b; 27b).

10. The boom mounting assembly according to claim 9, wherein
- the first sub-frame member (22; 23; 24) with the first roller member (25; 26; 27) is provided in an upper section (28) of the primary frame (12); and
- the second sub-frame member (22; 23; 24) with the second roller member (25; 26; 27) is provided in a lower section (29) of the primary frame (12), the lower section being (29) provided beneath the upper section (28).

11. The boom mounting assembly according to claim 9 or 10, wherein the first axis of rotation (25b; 26b; 27b) and the second roller axis of rotation are crossing in the pivot point (11).

12. The boom mounting assembly according to at least one of the claims 9 to 11, wherein the roller assembly is further comprising
- a third sub-frame member (22; 23; 24) provided on the primary frame (12) or the boom support frame (1); and
- a third roller member (25; 26; 27), the third roller member (25; 26; 27) rotatable around a third roller axis of rotation (25b; 26b; 27b) provided on the third sub-frame member (22; 23; 24), and a running surface of the third roller member (25; 26; 27) configured to rest detachably against at least one of the primary frame (12), the boom support frame (1), and the boom section of the boom;
wherein the third sub-frame member (22; 23; 24) is rotatable jointly with the third roller axis of rotation (25b; 26b; 27b) and the third roller member (25; 26; 27) around a third sub-frame axis of rotation (25b; 26b; 27b) which is extending transversely to the third roller axis of rotation (25b; 26b; 27b).

13. The boom mounting assembly according to claim 12, wherein each of the first, second and third sub-frame members (22; 23; 24) is provided in a corner section of a triangle arrangement (33).

## Patentansprüche

1. Auslegerbefestigungsanordnung zur Anbringung an einer landwirtschaftlichen Maschine, umfassend
- einen Hauptrahmen (12);
- einen Auslegertragrahmen (1), welcher eingerichtet ist, einen Ausleger zu tragen, und welcher derart am Hauptrahmen (12) aufgehängt ist, dass der Auslegertragrahmen (1) in einer Querebene um eine in einem Gelenkpunkt bereitgestellten Längsdrehachse schwenkbar ist;
- ein erstes Unterrahmenelement (22; 23; 24) bereitgestellt am Hauptrahmen (12) oder am Auslegertragrahmen (1); und
- ein erstes Rollenelement (25; 26; 27), wobei das erste Rollenelement (25; 26; 27) um eine erste Rollendrehachse (25b; 26b; 27b) bereitgestellt am ersten Unterrahmenelement (22; 23; 24) drehbar ist, und eine Lauffläche des ersten Rollenelements (25; 26; 27) eingerichtet ist, lösbar an mindestens einem des Hauptrahmens (12), des Auslegertragrahmens (1) und eines Auslegerabschnitts des Auslegers anzuliegen;
**dadurch gekennzeichnet, dass** das erste Unterrahmenelement (22; 23; 24) gemeinsam mit der ersten Rollendrehachse (25b; 26b; 27b) und dem ersten Rollenelement (25; 26; 27) um eine erste Unterrahmendrehachse (22a; 23a; 24a), welche sich quer zur ersten Rollendrehachse (25b; 26b; 27b) erstreckt, drehbar ist.

2. Auslegerbefestigungsanordnung nach Anspruch 1, wobei die erste Rollendrehachse (25b; 26b; 27b) durch ein fest mit dem ersten Unterrahmenelement (22; 23; 24) verbundenes erstes Achsenelement bereitgestellt ist.

3. Auslegerbefestigungsanordnung nach Anspruch 1 oder 2, wobei das erste Rollenelement (25; 26; 27) mit einer Kunststoffrolle versehen ist.

4. Auslegerbefestigungsanordnung nach mindestens einem der vorstehenden Ansprüche, wobei das erste Rollenelement (25; 26; 27) mit einer Doppelrolle (25a; 26a; 27a) versehen ist.

5. Auslegerbefestigungsanordnung nach mindestens einem der vorstehenden Ansprüche, wobei sich die erste Unterrahmendrehachse (22a; 23a; 24a) vertikal oder in Bezug auf die vertikale Linie (32) geneigt erstreckt.

6. Auslegerbefestigungsanordnung nach mindestens einem der vorstehenden Ansprüche, wobei sich die erste Unterrahmendrehachse (22a; 23a; 24a) oder/und die erste Rollendrehachse (25b; 26b; 27b) in einer horizontalen Rahmenebene des Hauptrahmens (12) oder einer Ebene, die sich parallel zur horizontalen Rahmenebene des Hauptrahmens (12) erstreckt, erstreckt/erstrecken.

7. Auslegerbefestigungsanordnung nach mindestens einem der vorstehenden Ansprüche, wobei das erste Unterrahmenelement (22; 23; 24) in einer Rahmenöffnung (20; 21), welche von Rahmenabschnitten umgeben ist, bereitgestellt ist.

8. Auslegerbefestigungsanordnung nach mindestens einem der vorstehenden Ansprüche, wobei das erste Unterrahmenelement (22; 23; 24) an zumindest einem des Hauptrahmens (12), des Auslegertragrahmens (1) und des Auslegerabschnitts des Auslegers lösbar befestigt ist.

9. Auslegerbefestigungsanordnung nach mindestens einem der vorstehenden Ansprüche, ferner umfassend eine Rollenanordnung, umfassend
- das erste Unterrahmenelement (22; 23; 24) und das erste Rollenelement (25; 26; 27);
- ein zweites Unterrahmenelement (22; 23; 24) bereitgestellt am Hauptrahmen (12) oder am Auslegertragrahmen (1); und
- ein zweites Rollenelement (25; 26; 27), wobei das zweite Rollenelement (25; 26; 27) um eine zweite Rollendrehachse (25b; 26b; 27b) bereitgestellt am zweiten Unterrahmenelement (22; 23; 24) drehbar ist, und eine Lauffläche des zweiten Rollenelements (25; 26; 27) eingerichtet ist, lösbar an mindestens einem des Hauptrahmens (12), des Auslegertragrahmens (1) und des Auslegerabschnitts des Auslegers anzuliegen;
wobei das zweite Unterrahmenelement (25; 26; 27) gemeinsam mit der zweiten Rollendrehachse (25b; 26b; 27b) und dem zweiten Rollenelement (25; 26; 27) um eine zweite Unterrahmendrehachse (22a; 23a; 24a), welche sich quer zur zweiten Rollendrehachse (25b; 26b; 27b) erstreckt, drehbar ist.

10. Auslegerbefestigungsanordnung nach Anspruch 9, wobei
- das erste Unterrahmenelement (22; 23; 24) mit dem ersten Rollenelement (25; 26; 27) in einem oberen Abschnitt (28) des Hauptrahmens (12) bereitgestellt ist; und
- das zweite Unterrahmenelement (22, 23; 24) mit dem zweiten Rollenelement (25; 26; 27) in einem unteren Abschnitt (29) des Hauptrahmens (12) bereitgestellt ist, wobei der untere Abschnitt (29) unterhalb des oberen Abschnitts (28) bereitgestellt ist.

11. Auslegerbefestigungsanordnung nach Anspruch 9 oder 10, wobei sich die erste Drehachse (25b; 26b; 27b) und die zweite Rollendrehachse im Schwenkpunkt (11) kreuzen.

12. Auslegerbefestigungsanordnung nach mindestens einem der Ansprüche 9 bis 11, wobei die Rollenanordnung ferner umfasst
- ein drittes Unterrahmenelement (22; 23; 24) bereitgestellt am Hauptrahmen (12) oder am Auslegertragrahmen (1); und
- ein drittes Rollenelement (25; 26; 27), wobei das dritte Rollenelement (25; 26; 27) um eine dritte Rollendrehachse (25b; 26b; 27b) bereitgestellt am dritten Unterrahmenelement (22; 23; 24) drehbar ist, und eine Lauffläche des dritten Rollenelements (25; 26; 27) eingerichtet ist, lösbar an mindestens einem des Hauptrahmens (12), des Auslegertragrahmens (1) und des Auslegerabschnitts des Auslegers anzuliegen;
wobei das dritte Unterrahmenelement (22; 23; 24) gemeinsam mit der dritten Rollendrehachse (25b; 26b; 27b) und dem dritten Rollenelement (25; 26; 27) um eine dritte Unterrahmendrehachse (25b; 26b; 27b), welche sich quer zur dritten Rollendrehachse (25b; 26b; 27b) erstreckt, drehbar ist.

13. Auslegerbefestigungsanordnung nach Anspruch 12, wobei das erste, zweite und dritte Unterrahmenelement (22; 23; 24) jeweils in einem Eckabschnitt einer Dreiecksanordnung (33) bereitgestellt sind.

## Revendications

1. Ensemble de montage de rampe pour la fixation à une machine agricole, comprenant :
- un châssis principal (12) ;
- un châssis de support de rampe (1) configuré pour supporter une rampe et suspendu au châssis principal (12) de sorte que le châssis de support de rampe (1) peut pivoter dans un plan transversal autour d'un axe de rotation longitudinal fourni en un point de pivotement ;
- un premier élément de sous-châssis (22 ; 23 ; 24) fourni sur le châssis principal (12) ou le châssis de support de rampe (1) ; et
- un premier élément de rouleau (25 ; 26 ; 27), le premier élément de rouleau (25 ; 26 ; 27) étant rotatif autour d'un premier axe de rotation de rouleau (25b ; 26b ; 27b) fourni sur le premier élément de sous-châssis (22 ; 23 ; 24), et une surface de roulement du premier élément de rouleau (25 ; 26 ; 27) configurée pour reposer de façon détachable contre au moins l'un(e) parmi le châssis principal (12), le châssis de support de rampe (1), et une section de rampe de la rampe ;
**caractérisé en ce que** le premier élément de sous-châssis (22 ; 23 ; 24) est rotatif conjointement avec le premier axe de rotation de rouleau (25b ; 26b ; 27b) et le premier élément de rouleau (25 ; 26 ; 27) autour d'un premier axe de rotation de sous-châssis (22a ; 23a ; 24a) qui s'étend transversalement au premier axe de rotation de rouleau (25b ; 26b ; 27b).

2. Ensemble de montage de rampe selon la revendication 1, dans lequel le premier axe de rotation de rouleau (25b ; 26b ; 27b) est fourni par un premier élément d'axe relié de manière fixe au premier élément de sous-châssis (22 ; 23 ; 24).

3. Ensemble de montage de rampe selon la revendication 1 ou 2, dans lequel le premier élément de rouleau (25 ; 26 ; 27) est doté d'un rouleau en plastique.

4. Ensemble de montage de rampe selon l'une au moins des revendications précédentes, dans lequel le premier élément de rouleau (25 ; 26 ; 27) est doté d'un rouleau duplex (25a ; 26a ; 27a).

5. Ensemble de montage de rampe selon l'une au moins des revendications précédentes, dans lequel le premier axe de rotation de sous-châssis (22a ; 23a ; 24a) s'étend verticalement ou de manière inclinée par rapport à la ligne verticale (32).

6. Ensemble de montage de rampe selon l'une au moins des revendications précédentes, dans lequel au moins l'un parmi le premier axe de rotation de sous-châssis (22a ; 23a ; 24a) et le premier axe de rotation de rouleau (25b ; 26b ; 27b) s'étend dans un plan de châssis horizontal du châssis principal (12) ou un plan s'étendant parallèlement au plan de châssis horizontal du châssis principal (12).

7. Ensemble de montage de rampe selon l'une au moins des revendications précédentes, dans lequel le premier élément de sous-châssis (22 ; 23 ; 24) est fourni dans une ouverture de châssis (20 ; 21) entourée par des sections de châssis.

8. Ensemble de montage de rampe selon l'une au moins des revendications précédentes, dans lequel le premier élément de sous-châssis (22 ; 23 ; 24) est monté de façon détachable sur au moins l'un(e) parmi le châssis principal (12), le châssis de support de rampe (1), et la section de rampe de la rampe.

9. Ensemble de montage de rampe selon l'une au moins des revendications précédentes, comprenant en outre un ensemble de rouleaux, comprenant :
- le premier élément de sous-châssis (22 ; 23 ; 24) et le premier élément de rouleau (25 ; 26 ; 27) ;
- un deuxième élément de sous-châssis (22 ; 23 ; 24) fourni sur le châssis principal (12) ou le châssis de support de rampe (1) ; et
- un deuxième élément de rouleau (25 ; 26 ; 27), le deuxième élément de rouleau (25 ; 26 ; 27) étant rotatif autour d'un deuxième axe de rotation de rouleau (25b ; 26b ; 27b) fourni sur le deuxième élément de sous-châssis (22 ; 23 ; 24), et une surface de roulement du deuxième élément de rouleau (25 ; 26 ; 27) configurée pour reposer de façon détachable contre au moins l'un(e) parmi le châssis principal (12), le châssis de support de rampe (1), et la section de rampe de la rampe ;
dans lequel le deuxième élément de sous-châssis (25 ; 26 ; 27) est rotatif conjointement avec le deuxième axe de rotation de rouleau (25b ; 26b ; 27b) et le deuxième élément de rouleau (25 ; 26 ; 27) autour d'un deuxième axe de rotation de sous-châssis (22a ; 23a ; 24a) qui s'étend transversalement au deuxième axe de rotation de rouleau (25b ; 26b ; 27b).

10. Ensemble de montage de rampe selon la revendication 9, dans lequel
- le premier élément de sous-châssis (22 ; 23 ; 24) avec le premier élément de rouleau (25 ; 26 ; 27) est fourni dans une section supérieure (28) du châssis principal (12) ; et
- le deuxième élément de sous-châssis (22 ; 23 ; 24) avec le deuxième élément de rouleau (25 ; 26 ; 27) est fourni dans une section inférieure (29) du châssis principal (12), la section inférieure (29) étant fournie sous la section supérieure (28).

11. Ensemble de montage de rampe selon la revendication 9 ou 10, dans lequel le premier axe de rotation (25b ; 26b ; 27b) et le deuxième axe de rotation de rouleau se croisent au niveau du point de pivotement (11).

12. Ensemble de montage de rampe selon l'une au moins des revendications 9 à 11, dans lequel l'ensemble de rouleaux comprend en outre :
- un troisième élément de sous-châssis (22 ; 23 ; 24) fourni sur le châssis principal (12) ou le châssis de support de rampe (1) ; et
- un troisième élément de rouleau (25 ; 26 ; 27), le troisième élément de rouleau (25 ; 26 ; 27) étant rotatif autour d'un troisième axe de rotation de rouleau (25b ; 26b ; 27b) fourni sur le troisième élément de sous-châssis (22 ; 23 ; 24), et une surface de roulement du troisième élément de rouleau (25 ; 26 ; 27) configurée pour reposer de façon détachable contre au moins l'un(e) parmi le châssis principal (12), le châssis de support de rampe (1), et la section de rampe de la rampe ;
dans lequel le troisième élément de sous-châssis (22 ; 23 ; 24) est rotatif conjointement avec le troisième axe de rotation de rouleau (25b ; 26b ; 27b) et le troisième élément de rouleau (25 ; 26 ; 27) autour d'un troisième axe de rotation de sous-châssis (25b ; 26b ; 27b) qui s'étend transversalement au troisième axe de rotation de rouleau (25b ; 26b ; 27b).

13. Ensemble de montage de rampe selon la revendication 12, dans lequel chacun des premier, deuxième, et troisième éléments de sous-châssis (22 ; 23 ; 24) est fourni dans une section d'angle d'un agencement triangulaire (33).
